# DEMANDE DE BREVET EUROPEEN

(11) **EP 1 068 887 A1**
(43) Date de publication de la demande: **17.01.2001**
(21) Numéro de dépôt: 00420158.8
(22) Date de dépôt: 11.07.2000
(51) Int. Cl.: B01D 24/00, B01D 36/00

(54) **Appareil de flottation et de filtration combinées pour la clarification de liquides chargés en matière en suspension**

(30) Priorité: 13.07.1999 FR 9909300
(71) Demandeur: Kaltchev, Roumen, 73000 Montagnole (FR)
(72) Inventeur: Kaltchev, Roumen, 73000 Montagnole (FR)
(74) Mandataire: Vuillermoz, Bruno

(57) **Abrégé**

Clarificateur de liquides chargés en matière en suspension comprenant :
- une première cuve cylindrique externe (4),
- une seconde cuve cylindrique centrale (1) de collecte du liquide filtré, sensiblement coaxiale à la première ;
- une cuve intermédiaire (2), ménagée entre la cuve externe (4) et la cuve centrale (1), et sensiblement coaxiale à celles-ci ;
- des moyens d'alimentation sous pression (19) du média filtrant (14) en liquide de lavage à contre-courant ;
- une hotte (26) de récupération du liquide de lavage après traversée du média filtrant (14) ;
- un pont tournant (8), susceptible de se mouvoir en rotation au dessus de l'ensemble des cuves cylindriques (1, 2, 4),
- un compartiment d'introduction du liquide à clarifier positionné entre la cuve intermédiaire (2) et la cuve centrale (1), et alimentant de manière centrale la cuve externe (4) en liquide chargés en matières en suspension, ledit compartiment étant lui-même alimenté en liquide à clarifier de l'extérieur au moyen d'une pluralité d'entrées (3).

## Description

### DOMAINE TECHNIQUE

L'invention concerne un. clarificateur de liquides chargés en matière en suspensions, utilisant deux techniques de séparation liquide / solides - la flottation à air dissous et la filtration sur un média filtrant (sable, anthracite ou autre média filtrant lavable à contre-courant). Le clarificateur selon l'invention peut être utilisé pour permettre la séparation des matières en suspension, ci-après désignées par le sigle MES, contenues dans un liquide, et ce, en deux étapes:
- tout d'abord par flottation - flottation naturelle (si leur densité est inférieure à celle du liquide), ou en association avec la technique de la flottation en air dissous ;
- ensuite par filtration sur un média filtrant lavable à contre-courant.

Le clarificateur selon l'invention est particulièrement destiné à la clarification d'un effluent liquide chargé en MES.

Dans ces deux cas (flottation naturelle ou flottation à air dissous) la construction et le principe de fonctionnement du clarificateur selon l'invention demeurent les mêmes.

### ART ANTERIEUR

Les techniques fondamentales mises en oeuvre dans le clarificateur selon l'invention sont connues elles-mêmes.
- la flottation naturelle et plus particulièrement la flottation à air dissous qui utilise la propriété de micro bulles d'un gaz d'adhérer aux particules en suspension (les MES) et de les faire remonter à la surface du liquide. Cette technique est souvent associée avec différents traitements chimiques permettant l'agglomération des MES.
- la filtration sur un média filtrant (sable ou autre).
- le lavage à contre-courant du média filtrant.

L'utilisation combinée de ces techniques dans un appareil circulaire est également connue. Le premier clarificateur de ce type a été installé aux Etats-Unis en 1980. Depuis ce type de clarificateur a connu plusieurs conceptions différentes, vendues sous les marques SANDFLOAT (SAF), SEDISANDFLOAT (SASF) et SANDFLOAT BP (SAF BP).

Les points communs entre ces clarificateurs connus sont sommairement les suivants. Le clarificateur est constitué d'une cuve circulaire dans laquelle le liquide à clarifier est introduit. La première étape de clarification est effectuée par une flottation à air dissous qui permet d'évacuer la majorité des MES vers la surface du liquide. A partir de la surface du liquide les matières flottées sont récupérées par une écope spiralée et évacuées de l'appareil. Le liquide partiellement clarifié par flottation descend vers le fond de la cuve pour être filtré sur une couche de sable ou autre (le média filtrant) disposé en partie inférieure de la cuve de l'appareil. Un dispositif de récupération du liquide filtré disposé sous le média filtrant permet l'évacuation de ce liquide vers un espace situé sous le fond de la cuve ou vers un collecteur extérieur. Le média filtrant est disposé dans plusieurs secteurs indépendants, séparés par des parois verticales. Le lavage à contre-courant du média filtrant est effectué secteur par secteur avec le liquide filtré par les autres secteurs. Une hotte de lavage suspendue au pont tournant permet, de collecter le liquide de lavage et de le recycler vers l'entrée de l'appareil, afin que les boues du lavage soient mélangées avec le liquide à traiter entrant et re-flottées. Ce clarificateur est par exemple décrit dans le document US-A-4 377 485.

Les différences entre ces clarificateurs connus résident dans la mise en oeuvre des techniques utilisées, et plus particulièrement dans
- le mode d'alimentation du clarificateur en liquide à traiter (radial ou central) ;
- le mode de récupération du liquide filtré (vers un espace commun à tous les secteurs ou séparément de chaque secteur vers un collecteur extérieur) :
- les dispositifs de collecte du liquide filtré (à travers des toiles, des crépines ou par des collecteurs tubulaires à fentes) ;
- la mise en place ou non d'un dispositif de récupération du premier filtrat ;
- le mode de lavage à contre-courant du média filtrant (par aspiration à travers la hotte de lavage ou sous pression à partir d'une cuve centrale par l'intermédiaire d'une pompe, ou par une tuyauterie extérieure à la cuve alimentant chaque secteur par un jeu de vannes).

Chacun, des ces clarificateurs connus présente ses avantages et ses inconvénients. Ainsi, le premier des clarificateurs cités (le SAF) utilise un mode d'alimentation en liquide à clarifier du type « radial ». Dans cette configuration, tout le débit du liquide à clarifier est introduit selon un rayon. L'alimentation est réalisée au moyen d'un dispositif embarqué sur le pont tournant qui est alimenté en liquide à clarifier par le biais d'un joint tournant situé dans l'axe au centre de l'appareil. La distribution se fait selon le principe d'annulation des vitesses : le liquide sort du dispositif de distribution radiale à la même vitesse à laquelle ledit dispositif (donc le pont tournant) recule. De plus, ce dispositif d'alimentation est complété avec un floculateur embarqué sur le pont. Ce système d'introduction du liquide à clarifier s'avère trop lourd, trop cher et finalement inadapté à la fonction visant à permettre une clarification par flottation avant la filtration. En effet, à chaque moment, tout le débit du liquide à clarifier est introduit sur un rayon de manière tournante comme dans un canal circulaire, alors que la filtration sur le média filtrant s'effectue de façon homogène et régulière sur toute la surface du filtre. Il est évident que de cette manière les parties du filtre (les secteurs) situées à proximité immédiate du point d'introduction du liquide à clarifier reçoivent des quantités de liquide pratiquement non clarifiées par flottation (ou du moins mal clarifiées) car les turbulences au moment de l'introduction sont importantes et la flottation pas très efficace. Par conséquent, le filtre se colmate excessivement rapidement, altérant de manière rédhibitoire le fonctionnement d'un tel clarificateur.

Le deuxième appareil de cette famille, le SASF, permet de surmonter cet inconvénient car il est alimenté de façon centrale depuis une cuve centrale, de façon à ce que le débit du liquide à clarifier soit réparti uniformément sur toute la surface du filtre. En revanche, le lavage à contre-courant des secteurs du filtre est réalisé dans ce cas par aspiration à travers la hotte de lavage de liquide filtré dans un espace situé sous lesdits secteurs et commun à tous les secteurs. En effet, le lavage à contre-courant par aspiration à travers la hotte de lavage pose des problèmes d'efficacité du lavage, car la pompe de lavage est « étranglée » à l'aspiration et sa caractéristique est facilement déviée de la courbe de fonctionnement. Par conséquent, plus le média filtrant est colmaté, plus la pompe de lavage est « étranglée » à l'aspiration, et plus le débit de lavage devient instable et a tendance à diminuer. Le média filtrant se colmate donc de plus en plus et les pertes de charge dans le filtre augmentent en proportion jusqu'au colmatage complet du média filtrant.

Le dernier des clarificateurs cités (le SAF BP) ne présente pas ce problème, car le lavage à contre-courant du média filtrant s'effectue sous pression. L'inconvénient majeur de cet appareil est essentiellement économique. En effet, les tuyauteries extérieures, le nombre important de vannes automatiques d'isolement, les dispositifs de contrôle de ces vannes, les asservissements et les automatismes relativement sophistiqués nécessaires à son fonctionnement entraînent un coût de l'ensemble de l'installation assez conséquent.

### BREVE DESCRIPTRON DE L"INVENTION

Le dispositif selon l'invention permet de mettre en oeuvre un concept plus simple et moins coûteux de ce type de clarificateurs combinés, en utilisant les deux techniques de séparation précités, à savoir la flottation et la filtration sur média filtrant dans les meilleures conditions pour chacune d'entre elles, tout en s'affranchissant des inconvénients rappelés ci-dessus. En effet, il évite les risques de dysfonctionnement des dispositifs antérieurs de cette famille en combinant un mode d'alimentation central avec un mode de lavage du média filtrant sous pression sans présenter les inconvénients économiques importants entraînés par les collecteurs externes de récupération séparée du liquide clarifié de chaque secteur et les collecteurs d'alimentation des secteurs en liquide pour le lavage à contre-courant.

A cet effet, le clarificateur conforme à l'invention comprend un compartiment d'introduction du liquide à clarifier positionné entre une cuve intermédiaire et la cuve centrale de collecte du liquide filtré, et alimentant de manière centrale la cuve externe en liquide chargés en matières en suspension, ledit compartiment étant lui-même alimenté en liquide à clarifier de l'extérieur au moyen d'une pluralité d'entrées.

Selon l'invention, ledit compartiment alimente la cuve externe sensiblement le long de toute sa circonférence. Ce compartiment peut être constitué par la cuve intermédiaire elle-même, qui alimente la cuve externe par simple débordement, induisant de fait une alimentation centrale en liquide à clarifier

Le dispositif de génération des micro bulles de gaz nécessaires à la flottation n'est pas décrit, car considéré comme connu. A titre indicatif, le liquide pressurisé comportant les micro bulles est introduit dans la tuyauterie d'alimentation du clarificateur.

Le clarificateur comporte une cuve cylindrique (la cuve externe) équipée d'un chemin de roulement en partie supérieure et un pont tournant supportant une écope spiralée d'extraction des matières flottées et une hotte de récupération du liquide de lavage. Un entonnoir avec une tuyauterie d'évacuation des matières flottées est disposé dans l'axe du clarificateur. Au centre de la cuve du clarificateur, sont disposées deux cuves cylindriques concentriques, l'une servant à l'introduction et à la répartition du liquide à clarifier dans le clarificateur, et l'autre (celle qui est au centre) - à la collecte du liquide filtré. A l'extérieur de ces deux cuves centrales, le fond de la cuve du clarificateur est séparé en secteurs par des parois verticales remontant jusqu'à un certain niveau sous la surface du liquide. Le média filtrant est disposé dans chaque secteur le remplissant jusqu'à un niveau inférieur au niveau des bords des parois verticales délimitant les secteurs.

Le fond de chaque secteur est double :
- un premier fond supérieur équipé de crépines (ou autre dispositif de retenu du média filtrant) et assurant la fonction de support du média filtrant ;
- un second fond inférieur, délimitant un volume dans lequel est collecté le liquide filtré provenant de chaque secteur.

Un tuyau renvoie le liquide filtré collecté entre les deux fonds de chaque secteur vers la cuve cylindrique située au centre du clarificateur. Une pompe de lavage à contre-courant est suspendue au pont tournant à l'intérieur de la cuve de collecte du liquide filtré située au centre du clarificateur par l'intermédiaire d'un support. Un dispositif de levage permet de soulever la pompe de lavage pendant la rotation du pont tournant et de la baisser quand le pont s'arrête, positionnant la hotte de lavage sur le secteur à laver. La pompe de lavage est positionnée de façon à s'emboîter sur le tuyau de collecte du liquide filtré du secteur à laver.

Le clarificateur comporte également un ensemble de dispositifs de positionnement de la hotte de lavage sur le secteur à laver et de dispositifs assurant le contact de ladite hotte avec les parois dudit secteur. Il comporte aussi des dispositifs d'alimentation électrique de la pompe de lavage, des motoréducteurs d'entraînement du pont tournant et de l'écope spiralée, ainsi que d'autres organes de contrôle installés sur le pont.

La manière dont l'invention peut être réalisée et les avantages qui en découlent, ressortiront mieux des exemples de réalisation qui suivent donnés à titre indicatif et non limitatif, à l'appui des figures annexées.'

### BREVE DESCRIPTION DES FIGURES

La figure 1 est une représentation schématique vue en plan du clarificateur selon l'invention.

La figure 2 est une représentation schématique en section verticale du clarificateur. selon l'invention.

La figure 3 est une représentation schématique d'une variante de la partie centrale du clarificateur selon l'invention.

La figure 4 est une représentation schématique vue en plan de la partie centrale et du système de lavage du clarificateur selon l'invention muni d'un organe d'accouplement entre la pompe de lavage et les collecteurs utilisant le poids de la pompe.

La figure 5 est une représentation schématique selon une section verticale du détail montré sur la figure 4.

La figure 6 est une vue analogue à la figure 3 d'une deuxième variante du clarificateur selon l'invention.

La figure 7 est une vue analogue aux figures 3 et 6 d'une troisième variante du clarificateur selon l'invention.

La figure 8 est une représentation schématique vue en plan de la partie centrale et du système de lavage d'une autre variante du clarificateur selon l'invention muni d'un organe d'accouplement entre la pompe de lavage et les collecteurs utilisant des vérins pneumatiques.

La figure 9 est une représentation schématique en section verticale d'un détail montré sur la figure 8.

### DESCRIPTION DETAILLEE DU CLARIFICATEUR SELON L'INVENTION

Le clarificateur conforme à l'invention comprend tout d'abord une cuve cylindrique externe (4) définissant l'enceinte de traitement du liquide chargé en matières en suspension à traiter.

Selon une première caractéristique de l'invention, le clarificateur comporte en outre une cuve cylindrique centrale (1) et une virole interne (2); installées l'une à l'intérieur de l'autre au centre du clarificateur, et concentriquement par rapport à la cuve externe (4). Dans la suite de la description, la référence (2) désignera indistinctement la virole (2) et une cuve intermédiaire, cette cuve intermédiaire étant définie dans l'espace par la virole (2) et la paroi verticale cylindrique définissant la cuve centrale (1).

Le liquide à clarifier (préalablement mélangé avec le liquide pressurisé comportant les micro bulles et éventuellement avec les produits chimiques de conditionnement) est introduit dans l'espace entre la cuve centrale (1) et la virole (2) par l'intermédiaire d'une ou plusieurs conduites d'alimentation (3). De cet espace, le liquide à clarifier est réparti de manière centrale vers toute la circonférence de la cuve externe (4) dans l'espace de flottation délimité par la virole (2) et la paroi cylindrique externe définissant la cuve (4) du clarificateur.

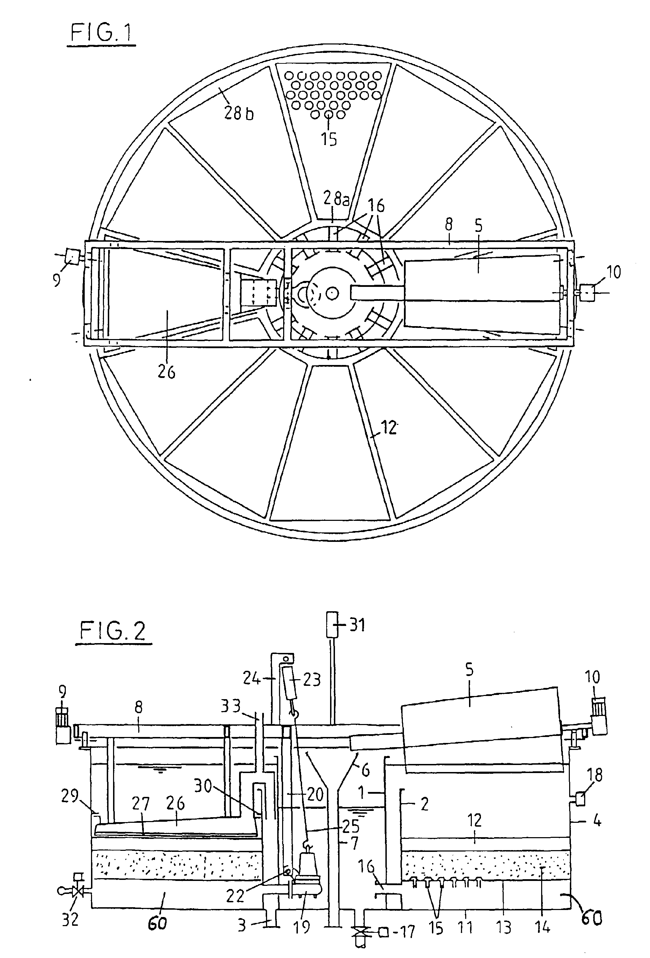

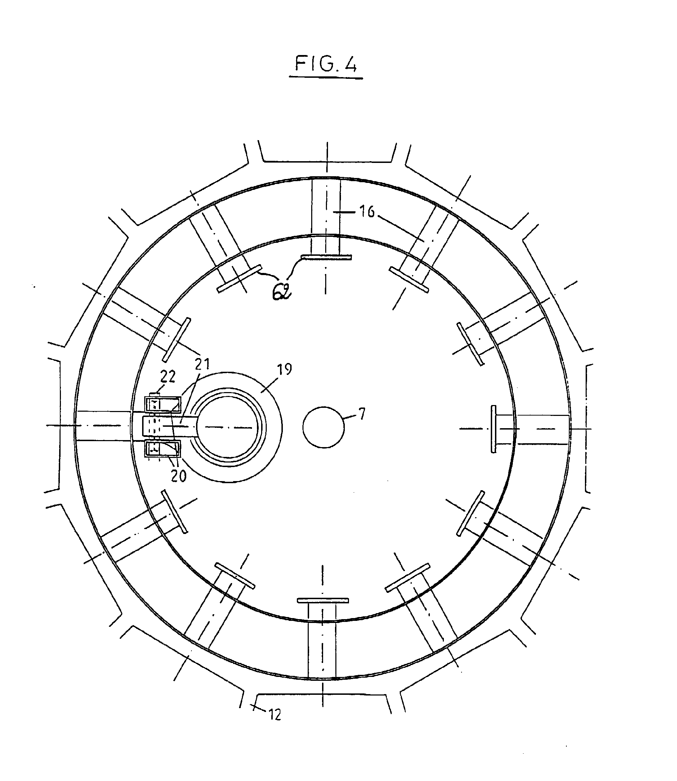

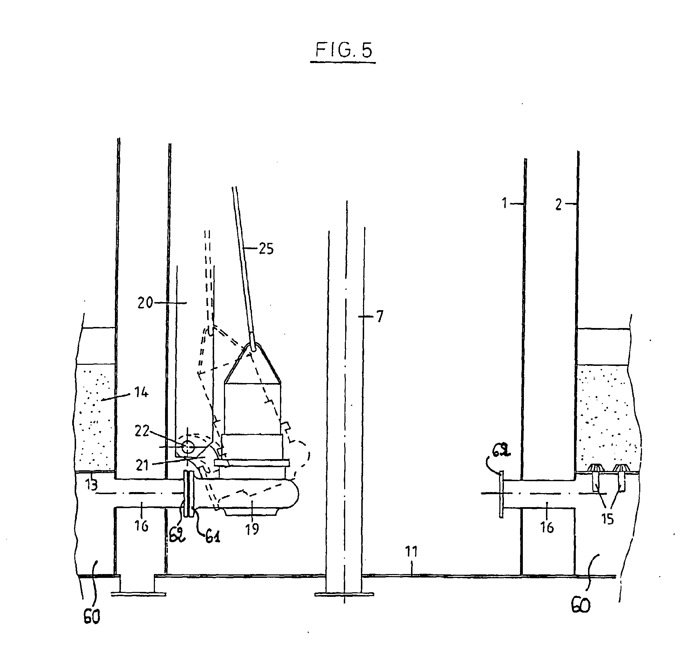

Selon la forme de réalisation décrite de l'invention en liaison avec les figures 1 et 2, l'alimentation de la cuve externe (4) en liquide à clarifier s'effectue par débordement dudit liquide au dessus de la virole (2), assurant de la sorte une répartition sensiblement uniforme dudit liquide dans l'intégralité du volume de traitement défini par la cuve externe (4).

Dans l'espace de flottation ainsi défini, s'effectue une première séparation des matières en suspension (MES) contenues dans le liquide. Le liquide clarifié par flottation descend par simple gravité vers le fond du clarificateur pour être filtré au travers d'un média filtrant. Les MES remontent vers la surface du liquide et forment une couche de matières flottées. Cette couche est écopée au moyen de l'écope à spirale (5), qui renvoie les matières flottées dans un entonnoir (6) ménagé à l'intérieur de la cuve centrale (1), et à partir duquel elles sont évacuées du clarificateur par l'intermédiaire d'une tuyauterie (7). L'écope spiralée (5) est montée sur un pont tournant (8), susceptible de se mouvoir en rotation au dessus de l'ensemble des cuves (1, 2, 4). La rotation du pont tournant (8) est assurée au moyen d'un motoréducteur (9). La rotation de l'écope spiralée (5) est assurée par un motoréducteur (10).

Le dispositif de filtration est disposé sous l'espace de flottation et est aménagé de la manière suivante

La partie inférieure de la cuve externe (4) du clarificateur est séparée en plusieurs secteurs de couronnes au moyen de parois verticales (12), montant jusqu'à un certain niveau dans l'espace de flottation. Par ailleurs, la cuve externe (4) comporte deux parois de fond, respectivement un premier fond (11), surmonté par un second fond (13), disposé à une certaine distance au dessus du fond (11), et sensiblement parallèle à celui-ci. Ces deux fonds définissent en liaison avec les parois verticales (12) et pour chaque secteur de couronne un réceptacle (60) destiné à recevoir le liquide filtré. Par ailleurs, le fond (13) est destiné à servir de support au média filtrant (14), typiquement constitué par du sable. Le fond (13) est en outre équipé de crépines (15), destinées à retenir le média filtrant (14) sur ledit fond (13), tout en permettant l'écoulement du liquide filtré au sein des réceptacles (60).

Le liquide filtré est évacué des réceptacles (60) en direction de la cuve centrale (1) au moyen d'une tuyauterie ou collecteur (16) (chaque secteur en possède un). Le liquide ainsi collecté dans la cuve centrale (1) est évacué du clarificateur par l'intermédiaire d'une vanne de régulation automatique (17). Cette vanne automatique (17) maintient le niveau du liquide dans l'espace de flottation par l'intermédiaire d'un détecteur de pression (18) positionné au sein dudit espace dans la cuve externe (4) et immergé dans le liquide à clarifier. Les pertes de charge dans le média filtrant (14) sont compensées par la différence entre le niveau du liquide dans l'espace de flottation (en amont dudit média filtrant) et le niveau du liquide filtré dans la cuve centrale (1) (en aval du filtre). Cette différence de niveau est réglée automatiquement par le dispositif de régulation du niveau constitué par l'ensemble vanne (17) / détecteur de pression (18).

Le lavage du média filtrant à contre-courant est effectué secteur par secteur sans interruption du fonctionnement du clarificateur, et ce, de la manière suivante :

Une pompe de lavage (19) est suspendue au pont tournant (8) à l'intérieur de la cuve centrale (1) par l'intermédiaire d'un support (20) solidarisé au pont (8) et d'un support (21), articulé à l'extrémité inférieure dudit support (20) au niveau d'un axe d'articulation (22). La pompe (19) est solidarisée audit support (22), et est destinée à être immergée dans le liquide clarifié stocké dans la cuve centrale (1). La pompe (19) peut donc pivoter autour de l'axe (22), ainsi que montré sur la figure 5. Elle se trouve donc en porte à faux par rapport au support à l'axe (22).

Un dispositif de levage composé d'un vérin (23) fixé sur le pont tournant (8) par l'intermédiaire d'un bras support (24) et d'un tirant (25), reliant le vérin (23) et la pompe (19), permet de faire pivoter la pompe (19) autour de l'axe (22). Quand le pont (8) tourne, la pompe (19) est relevée dans la position montrée en pointillés sur la figure 5 et le liquide filtré de tous les secteurs afflue dans la cuve (1) par l'intermédiaire des collecteurs (16). Dans cette position la pompe (19) ne touche pas les brides desdits collecteurs (16) et peut donc tourner librement. Quand le lavage à contre-courant d'un secteur doit être effectué, le pont tournant (8) s'arrête de telle sorte que la hotte de lavage (26), suspendue audit pont, se retrouve juste à l'aplomb du secteur en question.

Un joint pneumatique gonflable (27), ménagé sur le bord périphérique inférieur de la hotte (26), se gonfle et crée une étanchéité entre la hotte (26) et les parois (12) du secteur considéré, et les socles (28a) et (28b) dudit secteur. La hotte (26) est maintenue en position opérationnelle par des butées (29) et (30) ménagées au sein de la cuve (4), ainsi qu'on peut bien l'observer sur la figure 1. De cette façon le secteur à laver est isolé de l'espace de flottation pour une meilleure efficacité du lavage. La pompe de lavage (19) est positionnée de façon à ce que, au moment de l'arrêt du pont (8), sa bride de refoulement (61) se retrouve juste au dessus de la bride (62) du collecteur (16) du secteur à laver. Une fois la hotte (26) posée sur le secteur à laver, le dispositif de levage de la pompe (19) induit son basculement jusqu'à atteindre la position représentée en traits pleins sur la figure 5, c'est-à-dire jusqu'à ce que sa bride de refoulement (61) se retrouve plaquée contre la bride (62) du collecteur (16). L'étanchéité entre la bride (62) du collecteur (16) et la bride de refoulement (61) de la pompe (19) est assurée par le poids de la pompe qui, compte tenu de la position de l'axe (22) de pivotement, induit une certaine pression de la pompe contre le collecteur (16). Quand la pompe est appuyée contre le collecteur (16), elle est mise en marche pour aspirer le liquide filtré de la cuve (1) provenant des réceptacles (60), et pour le renvoyer sous pression au sein du réceptacle (60) correspondant au secteur à laver. Le liquide lavant le média filtrant se charge en boues de lavage puis est collecté sous la hotte (26) et enfin renvoyé dans l'espace entre la cuve centrale (1) et la cuve intermédiaire (2), afin d'y être remélangé avec le liquide à clarifier.

Ce dispositif de lavage permet d'éviter toutes les vannes automatiques d'isolement des secteurs, toutes les vannes automatiques d'orientation du liquide de lavage vers le secteur à laver et toutes les tuyauteries de collecte du liquide filtré ou d'alimentation en liquide de lavage, ainsi que tous les accessoires et automatismes de contrôle de ces vannes.

Une fois le lavage du secteur terminé, la pompe (19) est arrêtée et levée en position haute (comme montré en traits mixtes sur la figure 5), le joint pneumatique (27) de la hotte (26) est dégonflé et le pont (8) se remet en marche vers un autre secteur.

L'alimentation électrique et éventuellement pneumatique des différents équipements montés sur le pont tournant (8) est assurée par un contacteur rotatif (31), et éventuellement un joint pneumatique tournant associé audit contacteur.

Les différents éléments constitutifs du clarificateur selon l'invention peuvent être réalisés de plusieurs façons. Ainsi, l'alimentation du clarificateur en liquide à clarifier peut se faire par un ou plusieurs points d'introduction (3) introduisant le liquide à clarifier dans l'espace entre la cuve centrale (1) et la cuve intermédiaire (2). En outre, l'espace d'alimentation compris entre la cuve centrale (1) et la cuve intermédiaire (2) peut être remplacé par un canal circulaire, dont le fond est situé au dessus du fond (11), ce canal remplissant la même fonction que l'espace précité, c'est-à-dire destiné à permettre une alimentation centrale de l'espace de flottation défini par la cuve externe (4).

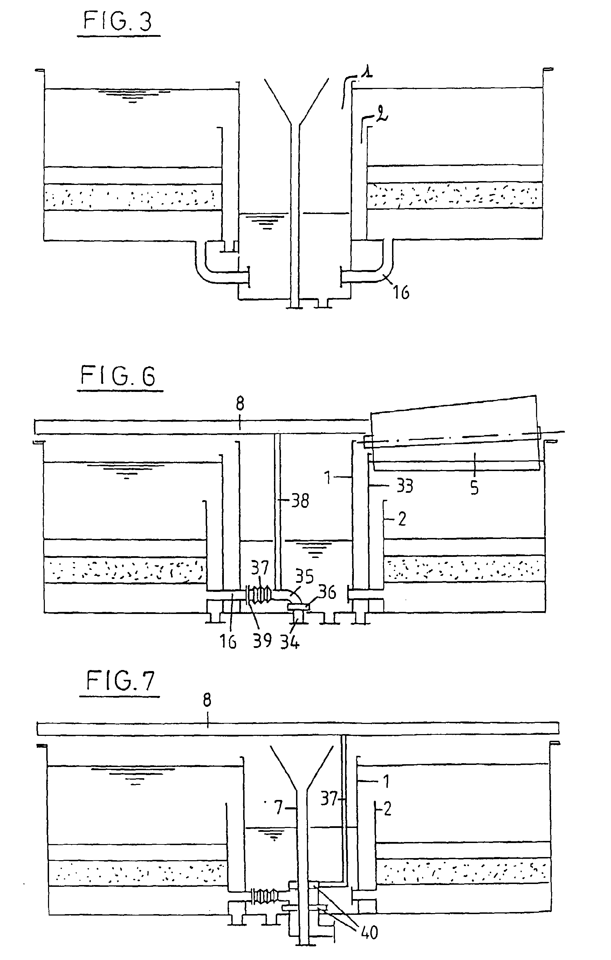

Le fond de la cuve centrale (1) peut être situé au même niveau que le fond (11) de la cuve externe (4), comme représenté sur la figure 2, ou bien être situé plus bas pour permettre d'augmenter les pertes de charges dans le média filtrant (14), comme représenté schématiquement sur la figure 3.

Le nombre de secteurs peut être variable, la seule contrainte étant inhérente au débit de lavage qui doit être absorbé par les autres secteurs.

Les crépines (15) peuvent être remplacées par un autre organe de retenue du média filtrant (14) remplissant la même fonction.

Le média filtrant (14) peut être constitué d'un seul matériau ou bien être constitué de deux couches différentes ayant chacune sa granulométrie et son poids spécifique (filtre bi-couches classique). Dans ce cas la pompe de lavage peut être électriquement connectée à un variateur de fréquence, permettant de faire varier le débit de lavage nécessaire à la séparation des deux couches.

Un dé - tassage du média filtrant (14) à l'air comprimé peut être également prévu par l'intermédiaire d'une vanne automatique (32) envoyant l'air dans les réceptacles (60) définis par fonds (11) et (13). Dans ce cas il convient de prévoir les crépines (15) adéquates. L'air issu de la phase de dé-tassage sort alors par l'évent (33) du conduit de la hotte (26).

Le vérin de levage (23) et le tirant (25) du dispositif de levage de la pompe (19) peuvent être rem placés par tout autre dispositif remplissant la même fonction.

Enfin, la pompe submersible de lavage (19) peut être remplacée par un autre type de pompe (par exemple une pompe du type à axe vertical), associée avec un autre dispositif de levage ou de pivotement assurant la connexion entre la conduite de refoulement de ladite pompe et les collecteurs (16).

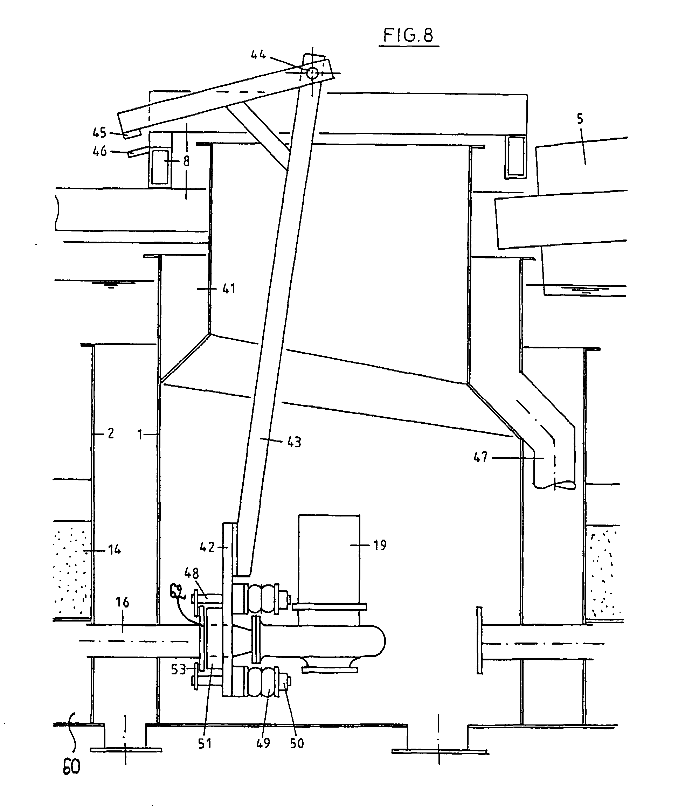

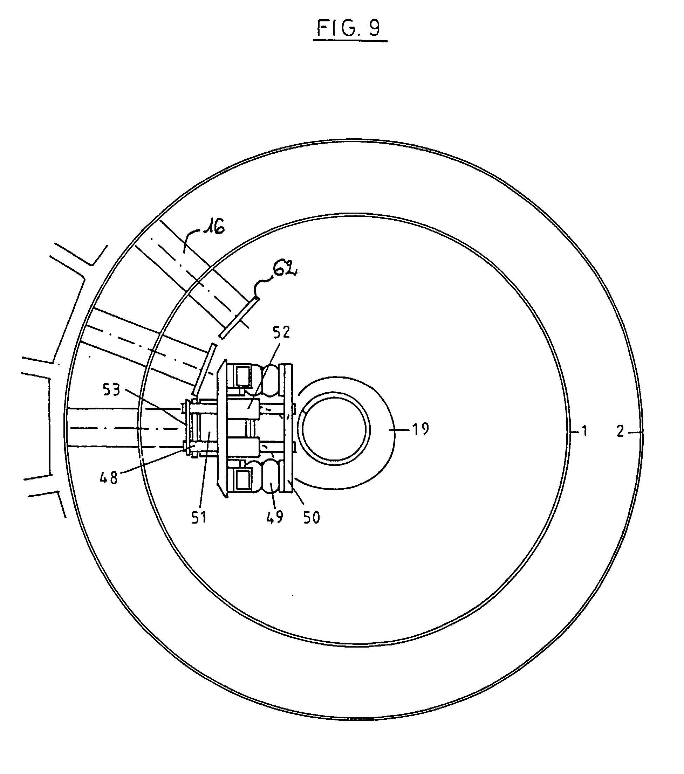

Une deuxième variante du clarificateur selon l'invention a été représentée sur les figures 8 et 9. Cette variante diffère de la forme de réalisation précédente essentiellement de par le mode de réalisation de l'accouplement entre la pompe de lavage (19) et les collecteurs (16). Si dans la version précédemment décrite, l'accouplement est réalisé grâce à l'appui fourni par le propre poids de la pompe (19), dans cette deuxième forme de réalisation, l'accouplement est réalisé grâce à l'appui de la bride d'accouplement de ladite pompe sur la bride du collecteur (16), ledit appui étant fourni par une source d'énergie extérieure.

La pompe (19) est suspendue au pont tournant (8) par le biais d'une plaque (42) solidarisée à un bras-support (43), ce dernier étant articulé sur un axe horizontale (44) solidaire du pont (8). L'ensemble pompe (19) / support (42, 43) pivote autour de l'axe (44) de façon à permettre à la bride d'étanchéité (51) (qui est également fixée sur la plaque 42) de s'éloigner ou de se rapprocher de la bride d'accouplement (62) du collecteur (16). L'axe (44) est positionné de telle sorte que le centre de gravité de l'ensemble pompe (19) / support (42, 43) soit toujours situé entre le plan vertical passant par l'axe (44) et la bride d'accouplement (62) du collecteur (16). De la sorte, le poids de la pompe (19) tend toujours à faire pivoter l'ensemble en direction dudit collecteur (16), et dans l'exemple décrit sur la figure 8, vers la gauche. Des barres coulissantes (48) coulissant dans des guides (52) permettent d'accrocher l'ensemble supportant la pompe de lavage (19) à la bride d'accouplement (62) des collecteurs (16) par le biais de crochets (53), et d'approcher ladite pompe vers la bride (62) de façon à créer l'étanchéité à ce niveau.

Quatre vérins (49) exercent une pression sur le côté de la plaque (42) opposé au collecteur (16) et ont pour point d'application l'extrémité (50) des barres coulissantes (48).

Les matières flottées écopées par l'écope (5) sont collectées dans une goulotte (41) et évacuées par une conduite (47), aboutissant au niveau de la cuve intermédiaire (2).

L'accouplement entre la pompe (19) et la bride d'accouplement (62) des collecteurs (16) est réalisé de la manière suivante

Les quatre vérins (49) sont alimentés en air comprimé (ou un autre fluide) en parallèle (alimentation non montrée sur le schéma). Sous l'action de l'air comprimé, les vérins agissent sur les barres (48) qui de leur côté tirent les crochets (53) vers la plaque (42). Les barres coulissantes (48) coulissent dans les guides (52) permettant ainsi aux crochets (53) de s'accrocher à la bride d'accouplement (62) du collecteur (16), et ensuite d'attirer la plaque (42) vers ladite bride (62) jusqu'à ce que la bride d'étanchéité (51) solidaire de la plaque (42) et située coaxialement avec la bride (61) de la pompe vienne prendre appui contre ladite bride (62). La pompe de lavage (19) est ensuite mise en marche. Une fois le lavage terminé, la pompe de lavage est arrêtée et le désaccouplement est réalisé de la façon inverse. Ainsi, les vérins (49) sont mis en dépression (par une pompe à vide ou autre) de façon à se dégonfler et à se replier. Dans un premier temps, la plaque (42) se détache de la bride (62) du collecteur (16) car la disposition du centre de gravité de l'ensemble pompe/support tend à l'éloigner de ladite bride. De fait, la plaque (42) recule (sur la figure 8 se dirige vers la droite) jusqu'à ce qu'une saillie (45), ménagée à l'extrémité d'un bras solidaire du support (43), et également articulé sur l'axe (44) vienne prendre appui contre une butée (46), solidaire du pont tournant (8). De la sorte, on limite le débattement possible entre la plaque (42) et la bride d'accouplement (62) du collecteur (16). Puis, le repli des vérins se poursuivant, les crochets (53) se décrochent de la bride d'accouplement (62) et s'éloignent de celle-ci. Ainsi, la bride d'étanchéité (51) et les crochets (53) se retrouvent suffisamment éloignés de part et d'autre de la bride d'accouplement (62) des collecteurs (16) pour permettre la rotation du pont tournant (8), et donc de la pompe (19) vers un autre secteur à laver.

A titre exemplatif, le même type de dispositif d'accouplement peut être réalisé de plusieurs façons. Ainsi, les quatre vérins (49) peuvent être remplacés par un seul vérin en forme d'anneau dans l'axe duquel passe le refoulement de la pompe (non représenté).

Les vérins peuvent utiliser l'énergie pneumatique ou hydraulique. Ils peuvent être remplacés par un dispositif électromagnétique remplissant la même fonction.

L'accouplement peut être réalisé par un autre dispositif faisant pivoter la pompe de lavage (19) par rapport à l'axe (44) de façon à l'approcher et à l'éloigner de la bride d'accouplement (62) des collecteurs (16).

Enfin, dans une variante non représentée, le support (43) peut être fixé sur le pont tournant (8) de manière rigide (comme dans la première variante montrée sur la figure 5) de façon à ce que la pompe (19) reste toujours à la même distance de la bride d'accouplement des collecteurs (16). Dans ce cas, un joint gonflable logé dans la bride d'étanchéité (51) peut créer le contact et l'étanchéité entre lesdites brides.

Une troisième variante du clarificateur selon l'invention est représentée schématiquement sur la figure 6.

Dans cette variante, selon une première caractéristique, le clarificateur est équipé d'une paroi cylindrique supplémentaire (33), disposée entre les parois des cuves (1) et (2). L'espace entre les parois (1) et (33) est destiné à collecter les matières flottées provenant de l'écope. Le liquide pour le lavage des secteurs arrive de l'extérieur (sous pression) par la conduite immobile (34) dans la conduite tournante (35). Cette conduite (35) est solidaire du pont tournant (8) par l'intermédiaire d'un support (38). La rotation de la conduite (35) par rapport à la conduite (34) est assurée par un joint rotatif (36). L'extrémité de la conduite (35) est équipée avec un joint télescopique (37) (soufflet ou autre) permettant de faire avancer la bride (39) située à l'extrémité de la conduite tournante (35) en direction des collecteurs (16), afin de pouvoir faire plaquer la bride (39) sur la bride d'accouplement (62) du collecteur (16), et assurer ainsi 1 étanchéité pendant le lavage. En revanche, ce joint (37) permet de retirer ladite extrémité hors de la bride (62) des collecteurs en direction du joint rotatif (36) pendant la rotation du pont. La commande de ce joint télescopique (37) n'est pas montrée car sans rapport direct avec l'invention. En effet, l'appui de l'extrémité de la conduite tournante (35) sur les collecteurs (16) peut être réalisé de plusieurs façons.

Une quatrième variante du clarificateur selon l'invention est représentée schématiquement sur la figure 7- La différence avec la variante précédente réside essentiellement dans l'absence de la paroi (33). Les matières flottées sont collectées dans l'entonnoir central (6) comme dans le clarificateur montré sur les figures 1 et 2, mais l'alimentation du système de lavage se fait de l'extérieur par l'intermédiaire d'un double joint rotatif (40), conçu de façon à ce que la tuyauterie d'évacuation des matières flottées (7) puisse passer selon son axe.

Pour le reste, les deux variantes du clarificateur selon l'invention montrées sur les figures 6 et 7 sont globalement identiques à la version de base montrée sur les figures 1 et 2.

On conçoit dès lors tout l'intérêt du clarificateur conforme à l'invention, dans le cadre du traitement des effluents: liquides et des eaux résiduaires. En effet, outre une optimisation du fonctionnement de l'appareil, il est possible de simplifier de manière significative sa construction et de diminuer son coût.

## Revendications

1. Clarificateur de liquides chargés en matière en suspension associant les techniques de la clarification par flottation et de la filtration sur média filtrant lavable à contre-courant, comprenant :
- une première cuve cylindrique externe (4), comportant une pluralité de compartiments en forme de secteurs de couronne, lesdits compartiments comprenant chacun une séparation horizontale ou fond (13) définissant avec le fond (11) de la cuve (4) un réceptacle (60) du liquide filtré, ladite séparation horizontale (13) servant de support à un média filtrant (14), et étant munie de moyens (15) destinés à permettre le transit du liquide après filtration à travers ledit média filtrant au niveau desdits réceptacles (60) ;
- une seconde cuve cylindrique centrale (1) de collecte du liquide filtré, sensiblement coaxiale à la première ;
- une cuve intermédiaire (2), ménagée entre la cuve externe (4) et la cuve centrale (1), et sensiblement coaxiale à celles-ci ;
- un moyen de récupération et de collecte (5) des matières flottées ;
- des moyens d'alimentation sous pression (19) du média filtrant en liquide de lavage à contre-courant ;
- une hotte (26) de récupération du liquide de lavage après traversée du média filtrant (14);
- un pont tournant (8), susceptible de se mouvoir en rotation au dessus de l'ensemble des cuves cylindriques (1, 2, 4), et au niveau duquel sont suspendus d'une part, le moyen de récupération et de collecte (5) des matières flottées, d'autre part, la hotte (26) de récupération du liquide de lavage du média filtrant; et enfin lesdits moyens d'alimentation sous pression (19) en liquide de lavage ;
***caractérisé*** en ce qu'il comprend en outre un compartiment d'introduction du liquide à clarifier positionné entre la cuve intermédiaire (2) et la cuve centrale (1), et alimentant de manière centrale la cuve externe (4) en liquide chargés en matières en suspension, ledit compartiment étant lui-même alimenté en liquide à clarifier de l'extérieur au moyen d'une pluralité d'entrées (3).

2. Clarificateur selon la revendication 1, ***caractérisé*** en ce que ledit compartiment alimente la cuve externe (4) sensiblement le long de toute sa circonférence.

3. Clarificateur selon l'une des revendications 1 et 2, ***caractérisé*** en ce que ledit compartiment d'introduction du liquide à clarifier est constitué par la cuve intermédiaire (2).

4. Clarificateur selon la revendication 3, ***caractérisé*** en ce que l'alimentation de ladite cuve externe (4) en liquide à clarifier s'effectue par débordement de la paroi externe de la cuve intermédiaire (2).

5. Clarificateur selon l'une des revendications 1 à 3, ***caractérisé*** en ce qu'il comprend en outre des organes de connexion et de déconnexion des moyens d'alimentation sous pression (19) en liquide de lavage avec des collecteurs (16) issus des réceptacles (60) de liquide filtré, lesdits organes étant également suspendus au pont tournant (8), et immergés dans la cuve centrale (1).

6. Clarificateur selon l'une des revendications 1 à 5, ***caractérisé*** en ce que la hotte (26) est munie de moyens propres à assurer au niveau de chacun des compartiments en secteurs de couronne de la cuve externe (4) l'étanchéité, de telle sorte à permettre l'isolation du secteur considéré du reste de l'enceinte de flottation et l'évacuation du liquide de lavage chargé en boues de lavage du média filtrant au niveau du compartiment d'introduction de liquide à traiter.

7. Clarificateur selon la revendication 6, ***caractérisé*** en ce que la hotte (26) est munie d'un joint pneumatique gonflable (27) au niveau de son bord inférieur, dont le gonflement crée l'étanchéité entre la hotte (26), les parois verticales (12) définissant les secteurs et les socles (28a) et (28b) de chacun desdits secteurs, et en ce que chacun des secteurs comporte des butées (29) et (30) susceptibles de limiter la course en hauteur de ladite hotte (26).

8. Clarificateur selon l'une des revendications 1 à 7, ***caractérisé*** en ce que la cuve centrale (1) est munie d'une vanne (17) de régulation automatique du niveau de liquide contenu dans la cuve centrale (1) en fonction des pertes de charge dans le média filtrant, et dont le fonctionnement est corrélé avec un détecteur de pression (18) ménagé à l'intérieur de la cuve externe (4) et immergé dans le liquide à clarifier, de telle sorte à permettre de réaliser la régulation du niveau de liquide à clarifier au sein de ladite cuve externe (4).

9. Clarificateur selon l'une des revendications 1 à 8, ***caractérisé*** en ce que les moyens d'alimentation du média filtrant en liquide de lavage à contre-courant sont constitués par une pompe (19), ladite pompe étant immergée au sein de la cuve centrale (1), et étant articulée au niveau d'un axe d'articulation (22) solidaire d'un bras-support (20) issu du pont roulant (8), ladite pompe étant en outre munie d'organes d'accouplement destinés à permettre la connexion effective de ladite pompe au niveau de la bride d'accouplement (62) des collecteurs (16), l'étanchéité dudit accouplement étant inhérent au poids de la pompe en porte à faux par rapport à l'axe d'articulation (22).

10. Clarificateur selon l'une des revendications 1 à 8, ***caractérisé*** en ce que les moyens d'alimentation du média filtrant en liquide de lavage à contre-courant sont constitués par une pompe (19), ladite pompe étant immergée au sein de la cuve centrale (1), ladite pompe étant solidarisé à un bras - support (42, 43), solidarisé au pont tournant (8), et étant en outre munie d'organes d'accouplement mettant en oeuvre une source d'énergie pneumatique, hydraulique, mécanique ou électromagnétique, destinés à permettre la connexion effective de ladite pompe au niveau de la bride d'accouplement (62) des collecteurs (16).

11. Clarificateur selon l'une des revendications 1 à 10, ***caractérisé*** en ce que les moyens d'alimentation du média filtrant en liquide de lavage à contre-courant sont constitués par une conduite (35), tournant de manière solidaire avec le pont tournant (8) et alimenté en liquide de lavage sous pression provenant de l'extérieur du clarificateur par l'intermédiaire d'un joint rotatif (36, 40), ladite conduite tournante (35) étant équipée de moyens de connexion et de déconnexion (37) avec lesdits collecteurs (16).
